# EUROPÄISCHE PATENTSCHRIFT

(11) **EP 1 584 816 B1**
(45) Veröffentlichungstag und Bekanntmachung des Hinweises auf die Patenterteilung: **07.03.2007**
(21) Anmeldenummer: 04101432.5
(22) Anmeldetag: 07.04.2004
(51) Int. Cl.: F02N 11/08, B60K 28/14

(54) **Vorrichtung und Verfahren zum Antreiben eines Fahrzeugs**
Apparatus and method for driving a vehicle
Dispositif et procédé pour propulser un véhicule

(43) Veröffentlichungstag der Anmeldung: 12.10.2005
(73) Patentinhaber: Ford Global Technologies, LLC, A subsidary of Ford Motor Company, Dearborn, MI 48126 (US)
(72) Erfinder: Leyten, Max Johan Adriaan, 6291EM, Vaals (NL)
(74) Vertreter: Drömer, Hans-Carsten

(56) Entgegenhaltungen:
- DE-A- 10 061 092
- GB-A- 242 115
- PATENT ABSTRACTS OF JAPAN Bd. 0091, Nr. 07 (M-378), 11. Mai 1985 (1985-05-11) -& JP 59 230830 A (FUJITSU TEN KK), 25. Dezember 1984 (1984-12-25)
- PATENT ABSTRACTS OF JAPAN Bd. 2000, Nr. 01, 31. Januar 2000 (2000-01-31) -& JP 11 270446 A (NISSAN DIESEL MOTOR CO LTD), 5. Oktober 1999 (1999-10-05)
- PATENT ABSTRACTS OF JAPAN Bd. 0130, Nr. 45 (M-792), 2. Februar 1989 (1989-02-02) -& JP 63 251330 A (AICHI MACH IND CO LTD), 18. Oktober 1988 (1988-10-18)

## Beschreibung

Die Erfindung betrifft eine Vorrichtung zum Antreiben eines Fahrzeugs gemäß dem Oberbegriff von Anspruch 1 und ein entsprechendes Verfahren gemäß Anspruch 10.

Bei Kraftfahrzeugen können gefährliche Situationen insbesondere in solchen Fällen eintreten, in denen der Motor bzw. die Verbrennungsmaschine eines Fahrzeugs plötzlich während des Fahrens ausfällt. Ein solcher Ausfall kann unterschiedliche Ursachen haben. Beispielsweise kann er durch ein Versagen von einer Komponente der Verbrennungsmaschine oder durch fehlenden Treibstoff hervorgerufen werden. Das Fahrzeug könnte dann auf einer sehr dicht befahrenen Verkehrskreuzung, in einem langen Tunnel, auf einem Autobahnnotfallstreifen oder gar auf einem Bahnübergang stehen bleiben.

Insbesondere an verkehrsreichen Stellen stellt eine solche Situation ein sehr großes Unfallrisiko für einen Fahrer des Fahrzeuges und ggf. weitere Fahrzeuginsassen dar. In der Regel können die Fahrzeuginsassen nur das stehende Fahrzeug verlassen und sich zu einem sicheren Ort begeben, um dort auf Hilfe zu warten, oder im Fahrzeug bleiben und per Mobiltelefon Hilfe rufen. In manchen Fällen ist ein sicherer Ort jedoch nicht verfügbar, wie zum Beispiel in einigen Tunnels, an Hochgeschwindigkeitsstraßenkreuzungen oder verkehrsreichen Autobahnen. Das Verweilen im Fahrzeug kann ebenfalls sehr gefährlich sein, wenn das Fahrzeug an einem unsicheren Ort stehen geblieben ist.

Ein plötzlich stehen gebliebenes Fahrzeug stellt jedoch nicht nur für die Fahrzeuginsassen eine unter Umständen große Gefahr dar, sondern auch für andere Verkehrsteilnehmer. Dies gilt vor allem dann, wenn das Fahrzeug an einer sehr unübersichtlichen Verkehrsstelle stehen geblieben ist, wie beispielsweise in einer schwer einsehbaren Kurve, wo es schnell zu Auffahrunfällen kommen kann.

Eine derzeit bekannte und oftmals praktizierte Möglichkeit, um ein stehen gebliebenes Fahrzeug zu bewegen ohne es zu verlassen, besteht darin, einen niedrigen Gang, z.B. den ersten oder zweiten Gang, zu wählen und den Anlassermotor bei eingelegtem Gang zu starten. Das vom Anlassermotor über die Kurbelwelle auf das Getriebe übertragene Drehmoment reicht in der Regel aus, um das Fahrzeug wenigstens einige Meter zu bewegen. Dieses Verfahren ist aber nicht in allen Situationen zuverlässig einsetzbar. Häufig reicht es nämlich nicht aus, das Fahrzeug nur wenige Meter zu bewegen, um einen sicheren Ort zu erreichen.

Die gattungsbildende JP 59230830 betrifft eine Notfallbetriebseinrichtung für ein Kraftfahrzeug, um dieses bei einem Motorausfall, also einem Notfall, beispielsweise von einem Schienenübergang zu entfernen. Hierzu wird in der JP 59230830 ein Steuersignal erzeugt, wodurch ein niedriger Gang in einem Getriebe eingelegt wird. Ein Anlassmotor wird über eine Energiequelle mit Strom versorgt, so dass eine Rotation des Anlassers die Räder des Kraftfahrzeugs über den ausgefallenen Motor antreibt. Damit kann das Kraftfahrzeug von der Gefahrenstelle wegbewegt werden.

Aufgabe der vorliegenden Erfindung ist es daher, eine Vorrichtung und ein Verfahren zum Antreiben eines Fahrzeugs vorzuschlagen, wobei der Notfallantrieb nicht bei einem nach fahrenden Auto aktiviert wird und von einem Fahrer deaktiviert werden kann.

Diese Aufgabe wird durch eine Vorrichtung zum Antreiben eines Fahrzeugs mit den Merkmalen von Anspruch 1 und durch ein entsprechendes Verfahren mit den Merkmalen von Anspruch 10 gelöst. Bevorzugte Ausgestaltungen der Erfindung ergeben sich aus den abhängigen Ansprüchen.

Ein wesentlicher Gedanke der Erfindung besteht darin, eine Antriebsmöglichkeit eines Fahrzeugs bei einem Ausfall der Antriebsmaschine des Fahrzeugs durch eine spezielle, insbesondere automatische und vor allem komfortable Ansteuerung eines Anlassermotor zu realisieren, so daß das Fahrzeug noch über eine längere Strecke weiter bewegt werden kann. Aufgrund dieser Antnebsmöglichkeit kann das Fahrzeug bei einem Motorausfall eine Gefahrenstelle ohne Probleme verlassen; zudem werden die Fahrzeuginsassen davor bewahrt, ein stehen gebliebenes Fahrzeug an einer Gefahrenstelle verlassen zu müssen oder im Fahrzeug auf Hilfe zu warten. Weiterhin werden übrige Verkehrsteilnehmer vor der Gefahr geschützt, die ein beispielsweise an einer unübersichtlichen Stelle liegen gebliebenes Fahrzeug darstellt.

Die Erfindung betrifft eine Vorrichtung zum Antreiben eines Fahrzeugs durch Ansteuern eines Anlassermotors (Starter) einer Antriebsmaschine des Fahrzeugs mit einer Auswerteeinrichtung, die ausgebildet ist, um ein Diagnosesignal zu empfangen und basierend auf dem Diagnosesignal einen Ausfall der Antriebsmaschine zu erkennen und ein Notfallsignal bereitzustellen, und einer Aktivierungseinrichtung, die ausgebildet ist, um ansprechend auf das Notfallsignal ein Aktivierungssignal zum Aktivieren des Anlassermotors auszugeben.

Bei dem Fahrzeug kann es sich um ein beliebiges Fahrzeug handeln, das von einer Antriebsmaschine angetrieben wird, die über einen Anlassermotor gestartet wird. Vorzugsweise ist die Antriebsmaschine ein Verbrennungsmotor. Als Anlassermotor wird vorzugsweise ein riemengetriebener integrierter Starter-Generator oder ein Kurbelwellen-Generator-Starter eingesetzt. Die erfindungsgemäße Vorrichtung kann sowohl in konventionellen als auch in hybriden Fahrzeugplattformen vorteilhaft eingesetzt werden. Die Erfindung nutzt in vorteilhafter Weise die elektrische Antriebskraft eines im Fahrzeug installierten elektrischen Motors durch eine "intelligente insbesondere elektronische Ansteuerung des Anlassermotors, um das Fahrzeug zu einem sicheren Platz zu bewegen um auf Hilfe zu warten. Vorzugsweise wird die Erfindung als elektrischer Antrieb für den Notfall eingesetzt.

Die Erfindung eignet sich insbesondere für den Einsatz in Fahrzeugen, in denen Blei-Säure-Batterien mit hoher Energiedichte (sogenannte advanced "lead-acid batteries" AGM), Nickel-Batterie-Systeme, wie Ni/Cd- oder NiMH-Batterien, oder Lithium-Batterie-Systeme, wie Lithium-lon- oder Lithium-Polymer-Batterien, eingesetzt werden. Derartige Batterien werden auch für Hybridantriebe eingesetzt und besitzen daher eine ausreichend hohe Kapazität und Energiedichte, um ein Fahrzeug auch über eine längere Distanz anzutreiben.

Ein weiterer Vorteil der vorliegenden Erfindung liegt darin, daß im Wesentlichen von den in einem Fahrzeug bereits vorhandenen Teilen Gebrauch gemacht wird und daher keine oder zumindest nur wenige zusätzliche Teile forderlich sind. Im Idealfall kann die Erfindung durch eine entsprechende Ausbildung von bereits im Fahrzeug vorhanden Steuergeräten ausgebildet werden, insbesondere durch eine Anpassung und/oder Ergänzung von in Steuergeräten implementierten Steuerprogrammen.

Erfindungsgemäß ist die oben erwähnte Auswerteeinrichtung ausgebildet, um ein Bewegungssignal zu empfangen und, um basierend auf dem Bewegungssignal die Aktivierungseinrichtung zu deaktivieren. Dies hat den Vorteil, daß der Notfallantrieb beispielsweise nicht bei einem noch fahrenden Auto aktiviert wird und von einem Fahrer beispielsweise durch eine Bremsung deaktiviert werden kann.

Die Aktivierungseinrichtung kann ferner ausgebildet sein, um ansprechend auf das Notfallsignal ein Einkuppelsignal auszugeben. Sobald also ein Ausfall der Antriebsmaschine festgestellt wird, wird durch diese Funktionalität sichergestellt wird, daß der Anlassermotor nicht im Leerlauf arbeitet, sondern seine Antriebsenergie zum Fortbewegen genutzt wird.

Das Diagnosesignal kann ein Positionssignal eines Zündschalters zum Starten der Antriebsmaschine sein; die Auswerteeinrichtung ist dann ausgebildet, um die Zeitdauer, in welcher der Zündschalter auf einer Zündposition steht, zu messen und mit einer vordefinierten maximalen Zünddauer zu vergleichen und um abhängig von einem Vergleichsergebnis das Notfallsignal bereitzustellen. Beispielsweise kann das Notfallsignal bereit gestellt werden, wenn der Zündschalter länger als die vordefinierte maximale Zünddauer in der Zündposition steht. Dann wird auf den Notantrieb über den Anlassermotor umgeschaltet. Dies ermöglicht die einfache Aktivierung des Notantriebs im Falle eines Schadens der Antriebsmaschine.

Bei Fahrzeugen, deren Antriebsmaschine eine Selbstdiagnoseeinrichtung aufweist kann das Diagnosesignal durch ein Maschinenausfall-Flag-Signal gebildet sein, das ein Setzen eines Ausfall-Flags der Selbstdiagnoseeinrichtung anzeigen kann. Die Auswerteeinrichtung kann ausgebildet sein, um als Folge eines Setzens des Ausfall-Flags das Notfallsignal bereitzustellen. Dies hat den Vorteil, daß ein Motorschaden bereits erkannt werden kann, während das Fahrzeug noch in Bewegung ist, und vor allem der Anlassermotor zum weiteren Antreiben des Fahrzeugs aktiviert werden kann.

In einer weiteren Ausgestaltung kann das Diagnosesignal ein Fahrzeuggeschwindigkeitssignal sein, das eine aktuelle Geschwindigkeit des Fahrzeuges anzeigt, und die Auswerteeinrichtung kann ausgebildet sein, um die Aktivierungseinrichtung abhängig von einer aktuellen Geschwindigkeit zu deaktivieren. Dies hat den Vorteil, das der Notfallantrieb nicht aktiviert wird, solange daß Fahrzeug eine für den Notfallantrieb noch zu hohe Geschwindigkeit aufweist beziehungsweise beispielsweise aufgrund eines Gefälles eine für den Notfallantrieb definierte Höchstgeschwindigkeit überschreitet.

In erfindungsgemäßer Ausgestaltung wird das Bewegungssignal aus einem Bremspedalsignal abgeleitet, und die Auswerteeinrichtung ist ausgebildet, um die Aktivierungseinrichtung ansprechend auf das aus dem Bremssignal abgeleitete Bewegungssignal zu deaktivieren. Dies hat beispielsweise den Vorteil, daß ein Fahrer den Notfallantrieb unterbrechen kann, wenn ein sicherer Ort erreicht ist.

Handelt es sich bei dem Getriebe um ein Schaltgetriebe so kann das Einkuppelsignal ein Warnsignal sein, um einem Fahrzeugführer zu signalisieren, daß er das Getriebe einkuppelt.

Handelt es sich dagegen bei dem Getriebe um ein Automatikgetriebe, so kann das Einkuppelsignal ein Getriebesteuersignal sein, um ein automatisches Einkuppeln des Automatikgetriebes zu bewirken.

In einer weiteren Ausgestaltung bei einem Fahrzeug mit einem Getriebe, kann die Aktivierungseinrichtung ferner ausgebildet sein, um ein Getriebezustandssignal zu empfangen und als Folge des Notfallsignals und des Getriebezustandssignal das Einkuppelsignal auszugeben.

Die Aktivierungseinrichtung kann ferner ausgebildet sein, um ansprechend auf das Notfallsignal ein Gangauswahlsignal zum Einlegen eines geeigneten Getriebegangs auszugeben.

Die Erfindung betrifft ferner ein Verfahren zum Antreiben eines Fahrzeugs durch Ansteuern eines Anlassermotors für eine Antriebsmaschine eines Fahrzeugs. Gemäß dem Verfahren wird ein Diagnosesignal empfangen, basierend auf einer Auswertung des Diagnosesignals ein Ausfall der Antriebsmaschine erkannt und dann ein Notfallsignal bereitgestellt. Als Folge des Notfallsignals wird schließlich ein Aktivierungssignal zum Aktivieren des Anlassermotors ausgegeben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Blockschaltbild einer Vorrichtung zum Ansteuern eines Anlassermotors gemäß einem Ausführungsbeispiel der vorliegenden Erfindung;
- Fig. 2: ein Blockschaltbild einer Vorrichtung zum Ansteuern eines Anlassermotors gemäß einem weiteren Ausführungsbeispiel der vorliegenden Erfindung; und
- Fig. 3: ein Ablaufdiagramm eines Verfahrens zum Ansteuern eines Anlassermotors gemäß einem Ausführungsbeispiel der vorliegenden Erfindung

Im folgenden können gleiche und/oder funktional gleiche Elemente mit den gleichen Bezugszeichen versehen sein.

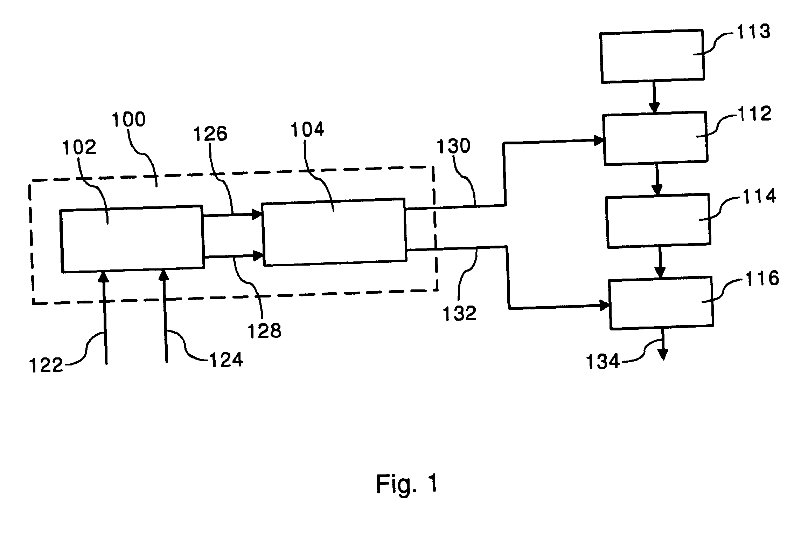

Fig. 1 zeigt ein Blockschaltbild einer Vorrichtung 100 zum Ansteuern eines Anlassermotors eines Kraftfahrzeugs gemäß einem Ausführungsbeispiel der vorliegenden Erfindung. Die Vorrichtung 100 weist eine Auswerteeinrichtung 102 und eine Aktivierungseinrichtung 104 auf und ist ausgebildet, um einen Anlassermotor 112 anzusteuern. Der Anlassermotor 112 bildet zusammen mit einer Antriebsmaschine 114 ein Teil einer Antriebseinrichtung des (nicht dargestellten) Fahrzeuges. Die Antriebseinrichtung weist hier ferner ein Getriebe 116 auf.

Die Vorrichtung 100 empfängt ein Diagnosesignal 122 und ein Bewegungssignal 124. Die Auswerteeinrichtung 102 leitet aus diesen Signalen ein Notfallsignal 126 und ein Deaktivierungssignal 128 ab, die sie der Aktivierungseinrichtung 104 zur weiteren Verarbeitung zur Verfügung stellt. Anhand dieser Signale erzeugt die Aktivierungseinrichtung 104 wiederum ein Aktivierungssignal 130 für den Anlassermotor 112 und ein Einkuppelsignal 132, welches ein Einkuppeln des Getriebes 116 bewirkt.

Der Anlassermotor 112 ist mit der Antriebsmaschine 114 verbunden beziehungsweise ein Teil der Antriebsmaschine 114 und dient in erster Linie zum Starten der Antriebsmaschine 114. Er wird im Wesentlichen durch einen leistungsstarken Elektromotor gebildet, der von einer Bleisäure- oder NiMH-Batterie 113 mit hoher Energiedichte, wie sie für Hybridantriebe eingesetzt wird, mit elektrischer Energie versorgt wird. Der Anlassermotor 112 ist mit der Antriebsmaschine 114 über einen Riemenantrieb gekoppelt oder direkt an der Kurbelwelle angeflanscht. Die Bewegungsenergie der laufenden Antriebsmaschine 114 wird über das Getriebe 116 auf die Fahrzeugsräder übertragen. Das Getriebe 116 ist entweder ein Schalt- oder Automatikgetriebe.

Ein Ausfall der Antriebsmaschine kann durch Auswerten eines oder mehrerer Betriebsparameter erkannt werden. Hierzu erhält die Vorrichtung 100 über das Diagnosesignal 122 Diagnoseinformationen über einen Betriebszustand der Antriebsmaschine 114. Bei den Diagnoseinformationen kann es sich um bereits ausgewertete Daten handeln, die direkt einen Ausfall der Antriebsmaschine 114 anzeigen, oder um Betriebsdaten, die in der Vorrichtung 100 ausgewertet werden, um einen Hinweis auf einen Ausfall der Antriebsmaschine 114 zu geben. Das Diagnosesignal 122 kann die zu übertragenden Diagnoseinformationen beispielsweise in Form von Daten erhalten, die über Sensoren der Antriebsmaschine 114 erhalten werden. Ferner können andere (nicht dargestellte) Einrichtungen die Diagnoseinformationen liefern, die mit der Antriebsmaschine 114 in Zusammenhang stehen oder die Funktionsfähigkeit der Antriebsmaschine überwachen oder diese steuern wie beispielsweise ein Motorsteuergerät.

Bei einem erkannten permanenten Ausfall der Antriebsmaschine 114, im U n-terschied zu einem Ausfall der Antriebsmaschine 114, der durch einen einfachen Neustart behoben werden kann, stellt die Auswerteeinrichtung 102 das Notfallsignal 126 bereit, das einen Ausfall der Antriebsmaschine 114 signalisiert. Das Notfallsignal 126 wird zusammen mit dem Deaktivierungssignal 128 von der Aktivierungseinrichtung 104 empfangen und ausgewertet. Sofern das Notfallsignal 126 aktiv ist, d.h. einen Ausfall signalisiert, und das Deaktivierungssignal 128 inaktiv ist, erzeugt die Aktivierungseinrichtung 104 das Aktivierungssignal 130 und gibt dieses aus. Die Aktivierungseinrichtung ist im ei n-fachsten Fall ein Ausgangstreiber zur Ansteuerung eines Einrück- oder Startrelais des Anlassermotors 112.

Das Aktivierungssignal 130 bewirkt, daß der Anlassermotor 112 startet und die Kurbelwelle der Antriebsmaschine 114 antreibt. Die ausgefallene Antriebsmaschine 114 springt jedoch nicht an, so daß alleine das Drehmoment des Anlassermotors 112 das Fahrzeug antreibt. Um das zur Verfügung stehende Drehmoment optimal nutzen zu können, sollte das Getriebe 116 in einen kleinen Gang mit einer großen Übersetzung geschaltet sein. Im Falle eines Automatikgetriebes kann dies automatisch erfolgen, indem die Aktivierungseinrichtung 104 eine entsprechendes Steuersignal für das Automatikgetriebe erzeugt.

Im dargestellten Ausführungsbeispiel ist die Auswerteeinrichtung 102 ferner zum Empfangen eines Bewegungssignals 124 ausgebildet, das eine Zustandsinformation über eine Bewegung des Fahrzeuges bereitstellt. Beispielsweise kann dies eine Geschwindigkeitsinformation oder eine Bremsinformation sein. Die Auswerteeinrichtung 102 ist ausgebildet, um das Bewegungssignal intern zu verarbeiten und daraus das Deaktivierungssignal 128 zu bilden. Beispielsweise kann das Diagnosesignal mit dem Bewegungssignal verknüpft werden, im Falle einer digitalen Signalverarbeitung durch eine logische Verknüpfung. Wird beispielsweise über das Diagnosesignal 122 direkt ein Ausfall der Antriebsmaschine 114 angezeigt, das Bewegungssignal zeigt jedoch eine hohe Geschwindigkeit des Fahrzeuges an, so kann die Auswerteeinrichtung 102 das Deaktivierungssignal 128 aktivieren und der Aktivierungseinrichtung 104 zuleiten, um so eine Ausgabe des Aktivierungssignals 130 und ein Starten des Anlassermotors 112 zu verhindern, der bei einer zu hohen Fahrzeuggeschwindigkeit zerstört werden könnte. Ist das Bewegungssignal 124 beispielsweise eine Geschwindigkeit des Fahrzeugs, kann diese mit einer Maximalgeschwindigkeit des Fahrzeugs verglichen werden, bis zu der der Anlassermotor 112 ohne die Gefahr einer Zerstörung aktiviert werden kann. Ist der Vergleich positiv, d.h. die Fahrzeuggeschwindigkeit größer als die Maximalgeschwindigkeit, wird das Deaktivierungssignal aktiviert.

Die Vorrichtung 100 zum Ansteuern kann als digitale Signalverarbeitungsschaltung ausgebildet sein und Verknüpfungseinrichtungen wie beispielsweise UND-Gatter und ODER-Gatter aufweisen, die zur logischen Verknüpfung des Diagnosesignals 122 und Bewegungssignals 124 vorgesehen sind. Ebenso können mehrere parallel oder nacheinander über das Diagnosesignal 122 oder das Bewegungssignal 124 empfangenen Informationen verarbeitet und für die Bildung des Notfall- und Deaktivierungssignals herangezogen werden. Das Diagnosesignal 122 und das Bewegungssignal 124 können über eine CAN-Busschnittstelle der Vorrichtung 100 zugeführt werden.

Wie dargestellt erzeugt die Aktivierungseinrichtung 104 neben dem Aktivierungssignal 130 auch das Einkuppelsignal 132, das ein Einkuppeln des Getriebes 116 steuert, um eine Kraftübertragung vom Anlassermotor 112 über das Getriebe 116 auf den Antriebsstrang des Fahrzeugs zu ermöglichen.

Fahrzeuge, die mit einem riemengetriebenen Starter (B-ISG: belt-driven integrated starter generator) oder einem Kurbelwellen-Startgenerator (C-ISG: crankshaft mounted integrated starter generator) ausgestattet sind, werden angetrieben, indem der Anlassermotor in Form einer elektrischen Maschine in einen "Boost-Mode" geschaltet wird. Dadurch wird ein besonders großes Drehmoment erzeugt, das effizient zum Antreiben des Fahrzeugs genutzt werden kann.

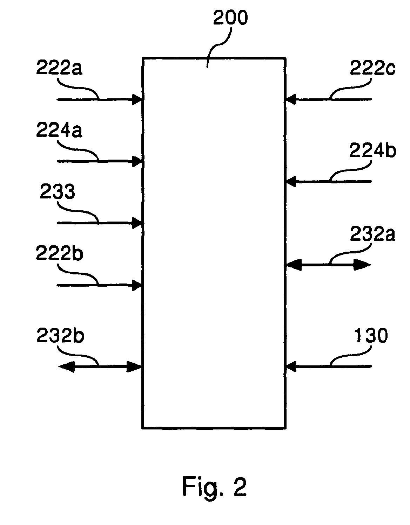

Fig. 2 zeigt ein Blockschaltbild einer Vorrichtung 200 zum Ansteuern eines Anlassermotors gemäß einem weiteren Ausführungsbeispiel der vorliegenden Erfindung, anhand der ein- und ausgehende Signale, insbesondere Steuersignale der Vorrichtung 200 übersichtlich dargestellt sind. Der Anlassermotor, in Form einer elektrischen Maschine, die Antriebsmaschine und das Getriebe entsprechen den in Fig. 1 gezeigten Elementen und sind in Fig. 2 nicht gezeigt. Bei der in Fig. 2 gezeigten Vorrichtung 200 zum Ansteuern kann es sich um eine Art Steuergerät handeln, z.B. in Form einer integrierten Schaltung, das die Funktionalität der in Fig. 1 gezeigten Auswerteeinrichtung und der gezeigten Aktivierungseinrichtung enthält.

Die in Fig. 2 gezeigte Vorrichtung 200 zum Ansteuern ist ausgebildet um als Diagnosesignale ein Zündschalterpositionssignal 222a und ein Maschinenausfall-Flag-Signal 222b sowie als Bewegungssignale ein Fahrzeuggeschwindigkeitssignal 224a, ein Drosselklappenpositionssignal 222c, ein Motordrehzahl-Signal 233 und ein Bremspedalsignal 224b zu empfangen. Die Signale 222a, 222b, 222c, 224a, 224b und 233 sind Eingangssignale der Vorrichtung 200. Die Vorrichtung 200 ist ferner ausgebildet zum Empfangen und Ausgeben eines bidirektionale Kupplungspedalsignal 232a und eines bidirektionalen Gangauswahlsignals 232b. Schließlich kann sie noch das Aktivierungssignal ausgeben, das eine Drehmomentanforderung an die elektrische Maschine, also den Anlassermotor bereitstellt.

Das Zündschalterpositionssignal 222a liefert der Vorrichtung 200 Zündinformationen über einen Zündungsvorgang der Antriebsmaschine. Die Auswerteeinrichtung ist ausgebildet, um eine Zeitdauer des Zündvorganges zu messen und mit einer vorgegebenen Zeitdauer zu vergleichen. Überschreitet die Zeitdauer des Zündvorgangs die vorgegebene, so wird das Notfallsignal aktiviert. Ebenso kann die Auswerteeinrichtung eine Anzahl von Zündversuchen während einer vorgegebenen Zeitspanne erfassen und mit einem vorgegebenen Wert vergleichen und abhängig davon das Notfallsignal aktivieren.

Das Maschinenausfall-Flag-Signal 222b wird beispielsweise von einer Selbstdiagnoseeinrichtung des Fahrzeuges bereitgestellt. Die Selbstdiagnoseeinrichtung signalisiert der Vorrichtung 200 über das Maschinenausfall-Flag-Signal 222b, daß ein Ausfall der Antriebsmaschine diagnostiziert wurde. Beispielsweise kann das Maschinenausfall-Flag-Signal 222b genutzt werden, um ein Ausfall-Flag auszulesen. In diesem Fall kann die Auswerteeinrichtung direkt als Folge des Maschinenausfall-Flag-Signal 222b das Notfallsignal bereitstellen. Eine weitere Auswertung ist in diesem Fall nicht erforderlich.

Das Drosselklappenpositionssignal 222c wird von der Antriebsmaschine bereitgestellt und zeigt der Vorrichtung 200 zum Ansteuern ein Stellung der Drosselklappen an. Aus der Drosselklappenstellung kann auf den Betrieb der Antriebsmaschine geschlossen werden, insbesondere ob ein Fahrzeugführer "Gas gibt".

Das Fahrzeuggeschwindigkeitssignal 224a zeigt der Vorrichtung 200 eine aktuelle Geschwindigkeit des Fahrzeuges an und das Bremspedalsignal 224b eine Stellung des Bremspedals bzw. allgemein einen Bremsvorgang an. Das Fahrzeuggeschwindigkeitssignal 224a sowie das Bremspedalsignal 224b können von der Vorrichtung 200 genutzt werden, um eine Entscheidung über eine Ausgabe des Aktivierungssignals 130 zu treffen. In bestimmten Situationen, beispielsweise einer hohen aktuellen Fahrzeuggeschwindigkeit oder einem von einem Fahrzeugführer ausgelösten Bremsung kann es vorteilhaft sein, das Aktivierungssignal 130 nicht auszugeben, obwohl ein Ausfall der Antriebsmaschine vorliegt, vorzugsweise um eine hohe Belastung oder gar Zerstörung des Anlassermotors zu vermeiden. Ansprechend auf das Fahrzeuggeschwindigkeitssignal 224a sowie das Bremspedalsignal 224b kann die Auswerteeinrichtung die Aktivierungseinrichtung deaktivieren. Altemativ können das Fahrzeuggeschwindigkeitssignal 224a und das Bremspedalsignal 224b logisch mit den übrigen Diagnosesignalen 222a, 222b, 222c verknüpft werden, um beispielsweise eine Aktivierung des Notfallsignals zu verhindern.

Das Kupplungspedalsignal 232a und das Gangauswahlsignal 232b zeigen der Vorrichtung 200 zum Ansteuern an, ob ein Gang eingekuppelt ist. Ist keine Gang eingekuppelt, bzw. ein für einen Antrieb durch den Anlassermotor ungeeigneter Gang eingekuppelt, so ist die Vorrichtung 200 zum Ansteuern ausgebildet, um über das Kupplungspedalsignal 232a und das Gangauswahlsignal 232b ein Einkuppeln eines geeigneten Ganges zu veranlassen. Vorzugsweise wird ein Gang mit einer großen Übersetzung bzw. ein auf das vom Anlassermotor lieferbare Drehmoment angepaßter Gang ausgewählt.

Bei einem manuellen Getriebe sollte der Fahrzeugführer darin unterrichtet sein, wie das Fahrzeug im Fall eines Notfalls zu benutzen ist. Der Fahrzeugführer kann in diesem Fall durch ein Warnsignal darauf aufmerksam gemacht werden, einen Gang einzukuppeln. Das Warnsignal kann von dem Kupplungspedalsignal 232a und dem Gangauswahlsignal 232b ausgelöst werden.

Wenn das Fahrzeug mit einem Automatik- oder einem halbautomatischen (ASM; ASM = automated shift manual) Getriebe ausgestattet ist, kann die Gangauswahl ohne größeren technischen Aufwand implementiert werden. In diesem Fall ist typischerweise lediglich die Ausgabe eines, dem Automatikgetriebe entsprechenden Kupplungspedalsignal 232a und Gangauswahlsignal 232b erforderlich. Wenn das Fahrzeug mit einem Automatik- oder einem ASM-Getriebe ausgestattet ist, sollte eine Gangauswahl und ein Kupplungsvorgang parallel gesteuert werden.

Der erfindungsgemäße Ansatz ermöglicht eine rein-elektrische Notfallfunktionalität, das heißt, daß das Fahrzeug nur durch den Anlassermotor angetrieben wird, auf solche Weise zu integrieren, das die Notfallfunktionalität bei Erkennen eines Maschinenschadens und einer entsprechenden Fahrerreaktion in einer kritischen Situation aktiviert wird. Der elektrische Antrieb kann auch dann automatisch gestartet werden, wenn der Zündschlüssel für eine gewisse Zeitdauer auf eine Zündposition gedreht ist. Zusätzlich sollte ein internes Kontroll-Flag eine Selbsterkennung eines Maschinenschadens aktiv anzeigen. Diese beiden Zustände könnten den rein-elektrischen Notfallantrieb auslösen.

Der elektrische Antriebsmodus sollte bei einem Kraftfahrzeug vorzugsweise in dem Fall aktiviert werden, bei dem der Fahrzeugführer versucht, den Motor erneut zu starten und eine Antriebsstrangsteuereinheit (PCM: powertrain control module) einen Maschinenschaden festgestellt hat, und diesen durch Setzen eines Flags in einer Fahrzeugsystemsteuereinheit (VSC: vehicle system control) anzeigt.

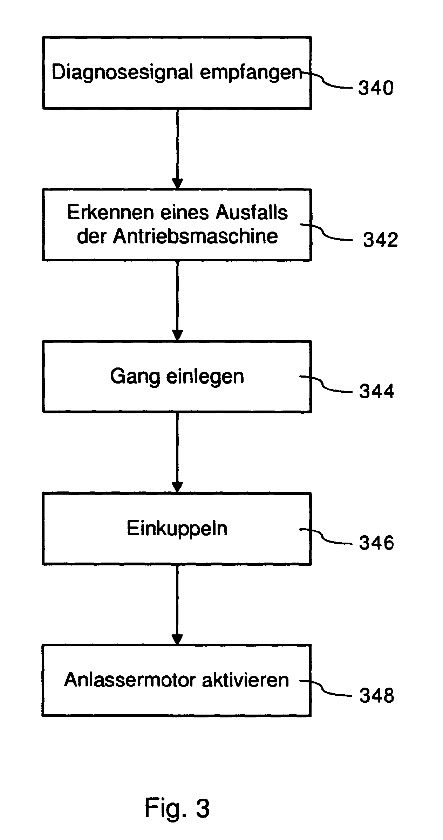

Fig. 3 zeigt ein Ablaufdiagramm eines Verfahrens zum Ansteuern eines Anlassermotors gemäß der vorliegenden Erfindung.

In einem ersten Schritt 340 wird ein Diagnosesignal empfangen oder ausgelesen. Vom Diagnosesignal läßt sich ein Betriebszustand einer Antriebsmaschine ableiten. In einem zweiten Schritt 342 wird eine vom Diagnosesignal über tragene Diagnoseinformation ausgewertet. Dadurch wird ein Ausfall der Antriebsmaschine erkannt. In einem dritten Schritt 344 wird ein Einlegen eines Ganges veranlaßt, sofern es sich um ein Fahrzeug mit einem Getriebe mit mehreren Gängen handelt. Ebenso wird in einem vierten Schritt 346 ein Einkuppeln veranlaßt, wenn es sich um ein Fahrzeug mit einem Getriebe handelt. In einem fünften Schritt 348 wird ein Aktivieren des Anlassermotors ausgelöst.

Die Vorrichtung zum Ansteuern kann in ein bestehendes Steuergerät, z.B. eine Motorsteuerung oder in Form eines ASIC (Application Specific Integrated Circuit), durch einen Prozessor oder Mikrokontroller implementiert werden. Bei einer Implementierung in ein vorhandenes Steuergerät kann das erfindungsgemäße Verfahren als Programm ausgeführt werden, das von einem leistungsfähigen Prozessor des Steuergeräts ausgeführt wird.

### Bezugszeichen

- 100: Vorrichtung zum Steuem eines Anlassermotors
- 102: Auswerteeinrichtung
- 104: Aktivierungseinrichtung
- 112: Anlassermotor
- 113: Batterie
- 114: Antriebsmaschine
- 116: Getriebe
- 122: Diagnosesignal
- 124: Bewegungssignal
- 126: Notfallsignal
- 128: Deaktivierungssignal
- 130: Aktivierungssignal
- 132: Einkuppelsignal
- 134: Antriebskraft
- 222a: Zündschalterpositionssignal
- 222b: Maschinenausfall-Flag-Signal
- 222c: Drosselklappenpositionssignal
- 224a: Fahrzeuggeschwindigkeitssignal
- 224b: Bremspedalsignal
- 232a: Kupplungspedalsignal
- 232b: Gangauswahlsignal
- 233: Motordrehzahl-Signal
- 340: erster Schritt
- 342: zweiter Schritt
- 344: dritter Schritt
- 346: vierter Schritt
- 348: fünfter Schritt

## Patentansprüche

1. Vorrichtung (100; 200) zum Antreiben eines Fahrzeugs durch Ansteuern eines Anlassermotors (112) einer Antriebsmaschine (114) eines Fahrzeugs, mit
einer Auswerteeinrichtung (102), die ausgebildet ist, um ein Diagnosesignal (122; 222a, 222b, 222c) zu empfangen und basierend auf dem Diagnosesignal einen Ausfall der Antriebsmaschine zu erkennen und ein Notfallsignal (126) bereitzustellen; und
einer Aktivierungseinrichtung (104), die ausgebildet ist, um ansprechend auf das Notfallsignal ein Aktivierungssignal (130) zum Aktivieren des Anlassermotors auszugeben,
**dadurch gekennzeichnet, dass**
die Auswerteeinrichtung (102) ferner ausgebildet ist, um ein Bewegungssignal (124; 224a, 224b) zu empfangen, um basierend auf dem Bewegungssignal die Aktivierungseinrichtung (104) zu deaktivieren, wobei das Bewegungssignal aus einem Bremspedalsignal (224b) abgeleitet wird und die Auswerteeinrichtung ausgebildet ist, um die Aktivierungseinrichtung ansprechend auf das aus dem Bremssignal abgeleitete Bewegungssignal zu deaktivieren.

2. Vorrichtung nach Anspruch 1,
**dadurch gekennzeichnet, daß**
die Aktivierungseinrichtung (104) ferner ausgebildet ist, um ansprechend auf das Notfallsignal (126) ein Einkuppelsignal (132; 232a) zum Einkuppeln eines Getriebes (116) auszugeben.

3. Vorrichtung nach Anspruch 1 oder 2,
**dadurch gekennzeichnet, daß**
das Diagnosesignal ein Positionssignal (222a) eines Zündschalters zum Starten der Antriebsmaschine ist, und die Auswerteeinrichtung ausgebildet ist, um die Zeitdauer, in welcher der Zündschalter auf einer Zündposition steht, zu messen und mit einer vordefinierten Zünddauer zu vergleichen und um abhängig von einem Vergleichsergebnis das Notfallsignal bereitzustellen.

4. Vorrichtung nach einem der Ansprüche 1 bis 3,
**dadurch gekennzeichnet, daß**
die Antriebsmaschine eine Selbstdiagnoseeinrichtung mit einem Ausfall-Flag zum Anzeigen eines Ausfalls der Antriebsmaschine aufweist, das Diagnosesignal ein Maschinenausfall-Flag-Signal (222b) ist, das ein Setzen des Ausfall-Flags anzeigt und daß die Auswerteeinrichtung ausgebildet ist, um als Folge eines Setzens des Ausfall-Flags das Notfallsignal bereitzustellen.

5. Vorrichtung nach einem der Ansprüche 1 bis 4,
**dadurch gekennzeichnet, daß**
das Bewegungssignal ein Fahrzeugsgeschwindigkeitssignal (224a) ist, und die Auswerteeinrichtung ausgebildet ist, um die Aktivierungseinrichtung abhängig von einer aktuellen Geschwindigkeit zu deaktivieren.

6. Vorrichtung nach einem der Ansprüche 2 bis 5,
**dadurch gekennzeichnet, daß**
das Getriebe ein Schaltgetriebe ist und das Einkuppelsignal ein Warnsignal ist, um einen Fahrzeugführer zu veranlassen, das Getriebe einzukuppeln.

7. Vorrichtung nach einem der Ansprüche 2 bis 6,
**dadurch gekennzeichnet, daß**
das Getriebe ein Automatikgetriebe ist und wobei das Einkuppelsignal ein Getriebesteuersignal ist, um ein Einkuppeln des Automatikgetriebes zu bewirken.

8. Vorrichtung nach einem der Ansprüche 2 bis 7,
**dadurch gekennzeichnet, daß**
die Aktivierungseinrichtung ferner ausgebildet ist, um ein Getriebezustandssignal zu empfangen und ansprechend auf das Notfallsignal und das Getriebezustandssignal das Einkuppelsignal auszugeben.

9. Vorrichtung nach einem der Ansprüche 2 bis 8,
**dadurch gekennzeichnet, daß**
die Aktivierungseinrichtung ferner ausgebildet ist, um ansprechend auf das Notfallsignal ein Gangauswahlsignal zum Einlegen eines geeigneten Getriebegangs auszugeben.

10. Verfahren zum Antreiben eines Fahrzeugs durch Ansteuern eines Anlassermotors für eine Antriebsmaschine eines Fahrzeugs, umfassend:
ein Diagnosesignal (122; 222a, 222b, 222c);
ein Bewegungssignal (124; 224a, 224b);
ein Notfallsignal (126);
ein Aktivierungssignal (130); wobei
das Diagnosesignal in einer Auswerteeinrichtung (102) empfangen wird, die basierend auf dem Diagnosesignal einen Ausfall der Antriebsmaschine (114) erkennt und das Notfallsignal bereitstellt, wobei
eine Aktivierungseinrichtung (104) auf das Notfallsignal anspricht und das Aktivierungssignal zum Aktivieren des Anlassermotors ausgibt, wobei
das Bewegungssignal von der Auswerteeinrichtung empfangen wird und die Auswerteeinrichtung darauf anspricht um basierend auf dem Bewegungssignal die Aktivierungseinrichtung zu deaktivieren, wobei
das Bewegungssignal aus einem Bremspedalsignal (224b) abgeleitet wird und die Auswerteeinrichtung ausgebildet ist, um die Aktivierungseinrichtung ansprechend auf das aus dem Bremssignal abgeleitete Bewegungssignal zu deaktivieren.

## Claims

1. Apparatus (100; 200) for driving a vehicle through activation of a starter motor (112) of an engine (114) of a vehicle, having
an evaluation device (102), which is designed to receive a diagnostic signal (122; 222a, 222b, 222c) and to detect a failure of the engine on the basis of the diagnostic signal and to deliver an emergency signal (126); and
an activation device (104), which is designed in response to the emergency signal to emit an activation signal (130) for activation of the starter motor,
**characterized in that**
the evaluation device (102) is further designed to receive a motion signal (124; 224a, 224b) and to deactivate the activation device (104) on the basis of the motion signal, the motion signal being derived from a brake pedal signal (224b) and the evaluation device being designed to deactivate the activation device in response to the motion signal derived from the brake signal.

2. Apparatus according to Claim 1, **characterized in that** the activation device (104) is further designed in response to the emergency signal (126) to emit an engagement signal (132; 232a) for the engagement of a transmission (116).

3. Apparatus according to Claim 1 or 2, **characterized in that** the diagnostic signal is a position signal (222a) from an ignition switch for starting the engine, and the evaluation device is designed to measure the period of time for which the ignition switch is in an ignition position and to compare this with a predefined ignition period and to deliver the emergency signal as a function of a comparative result.

4. Apparatus according to any one of Claims 1 to 3, **characterized in that** the engine has a self-diagnostic device with a failure flag for displaying a failure of the engine, that the diagnostic signal is an engine failure flag signal (222b), which displays a setting of the failure flag and that the evaluation device is designed to deliver the emergency signal in consequence of the setting of the failure flag.

5. Apparatus according to any one of Claims 1 to 4, **characterized in that** the motion signal is a vehicle speed signal (224a), and the evaluation device is designed to deactivate the activation device as a function of a current speed.

6. Apparatus according to any one of Claims 2 to 5, **characterized in that** the transmission is a manual shift transmission and the engagement signal is a warning signal to tell a driver of the vehicle to engage the transmission.

7. Apparatus according to any one of Claims 2 to 6, **characterized in that** the transmission is an automatic transmission and the engagement signal is a transmission control signal for effecting an engagement of the automatic transmission.

8. Apparatus according to any one of Claims 2 to 7,
**characterized in that** the activation device is further designed to receive a transmission status signal and to emit the engagement signal in response to the emergency signal and the transmission status signal.

9. Apparatus according to any one of Claims 2 to 8, **characterized in that** the activation device is further designed, in response to the emergency signal, to emit a gear selection signal for the engagement of a suitable transmission gear.

10. Method for driving a vehicle through activation of a starter motor for an engine of a vehicle, comprising:
a diagnostic signal (122; 222a, 222b, 222c);
a motion signal (124; 224a, 224b);
an emergency signal (126);
an activation signal (130);
the diagnostic signal being received in an evaluation device (102), which on the basis of the diagnostic signal detects a failure of the engine (114) and delivers the emergency signal,
an activation device (104) responding to the emergency signal and emitting the activation signal for activation of the starter motor,
the motion signal being received by the evaluation device and the evaluation device responding thereto by deactivating the activation device on the basis of the motion signal,
the motion signal being derived from a brake pedal signal (224b), and the evaluation device being designed to deactivate the activation device in response to the motion signal derived from the brake signal.

## Revendications

1. Dispositif (100 ; 200) pour propulser un véhicule en commandant un moteur de démarreur (112) d'un groupe propulseur (114) d'un véhicule comprenant
un dispositif d'interprétation (102) qui est configuré pour recevoir un signal de diagnostic (122 ; 222a , 222b , 222c) et, en se basant sur le signal de diagnostic, détecter une panne du groupe propulseur et fournir un signal d'urgence (126) ; et
un dispositif d'activation (104) qui est configuré pour délivrer, en réaction au signal d'urgence, un signal d'activation (130) destiné à activer le moteur de démarreur,
**caractérisé en ce que**
le dispositif d'interprétation (102) est en outre configuré pour recevoir un signal de déplacement (124 ; 224a , 224b) en vue de désactiver le dispositif d'activation (104) en se basant sur le signal de déplacement, le signal de déplacement étant dérivé d'un signal de pédale de frein (224b) et le dispositif d'interprétation étant configuré pour désactiver le dispositif d'activation en réaction au signal de déplacement dérivé du signal de frein.

2. Dispositif selon la revendication 1,
**caractérisé en ce que** le dispositif d'activation (104) est en plus configuré pour délivrer, en réaction au signal d'urgence (126), un signal d'accouplement (132 ; 232a) en vue d'accoupler un engrenage (116).

3. Dispositif selon la revendication 1 ou 2, **caractérisé en ce que** le signal de diagnostic est un signal de position (222a) d'un commutateur d'allumage destiné à démarrer le groupe propulseur et le dispositif d'interprétation est configuré pour mesurer la durée pendant laquelle le commutateur d'allumage se trouve sur une position d'allumage et la comparer avec une durée d'allumage prédéfinie puis fournir le signal d'urgence en fonction du résultat de la comparaison.

4. Dispositif selon l'une des revendications 1 à 3, **caractérisé en ce que** le groupe propulseur présente un dispositif d'autodiagnostic avec un marqueur de panne pour signaler une panne du groupe propulseur, le signal de diagnostic est un signal de marqueur de panne du groupe (222b) qui indique une activation du marqueur de panne et **en ce que** le dispositif d'interprétation est configuré pour fournir le signal d'urgence en conséquence de l'activation du marqueur de panne.

5. Dispositif selon l'une des revendications 1 à 4, **caractérisé en ce que** le signal de déplacement est un signal de la vitesse du véhicule (224a) et le dispositif d'interprétation est configuré pour désactiver le dispositif d'activation en fonction d'une vitesse actuelle.

6. Dispositif selon l'une des revendications 2 à 5, **caractérisé en ce que** l'engrenage est une boîte de vitesses et le signal d'accouplement est un signal d'alerte pour demander au conducteur du véhicule d'accoupler l'engrenage.

7. Dispositif selon l'une des revendications 2 à 6, **caractérisé en ce que** l'engrenage est une boîte de vitesses automatique et le signal d'accouplement est un signal de commande d'engrenage destiné à effectuer un accouplement de la boîte de vitesses automatique.

8. Dispositif selon l'une des revendications 2 à 7, **caractérisé en ce que** le dispositif d'activation est en plus configuré pour recevoir un signal d'état de l'engrenage et, en réaction au signal d'urgence et au signal d'état de l'engrenage, délivrer le signal d'accouplement.

9. Dispositif selon l'une des revendications 2 à 8, **caractérisé en ce que** le dispositif d'activation est en plus configuré pour délivrer, en réaction au signal d'urgence, un signal de sélection de rapport en vue d'engager un rapport d'engrenage approprié.

10. Procédé pour propulser un véhicule en commandant un moteur de démarreur pour un groupe propulseur d'un véhicule comprenant :
un signal de diagnostic (122 ; 222a , 222b , 222c) ;
un signal de déplacement (124 ; 224a , 224b) ;
un signal d'urgence (126) ;
un signal d'activation (130) ;
le signal de diagnostic étant reçu dans un dispositif d'interprétation (102) qui, en se basant sur le signal de diagnostic, détecte une panne du groupe propulseur (114) et fournit le signal d'urgence,
un dispositif d'activation (104) réagissant au signal d'urgence et délivrant le signal d'activation destiné à activer le moteur de démarreur,
le signal de déplacement étant reçu par le dispositif d'interprétation et le dispositif d'interprétation réagissant à celui-ci pour désactiver le dispositif d'activation en se basant sur le signal de déplacement,
le signal de déplacement étant dérivé d'un signal de pédale de frein (224b) et le dispositif d'interprétation étant configuré pour désactiver le dispositif d'activation en réaction au signal de déplacement dérivé du signal de frein.
